# EUROPÄISCHE PATENTSCHRIFT

(11) **EP 3 829 964 B1**
(45) Veröffentlichungstag und Bekanntmachung des Hinweises auf die Patenterteilung: **17.08.2022**
(21) Anmeldenummer: 19708245.6
(22) Anmeldetag: 21.02.2019
(51) Int. Cl.: B62D 55/26, B62D 55/253

(54) **VORRICHTUNG ZUM BEFESTIGEN EINES RAUPENKETTENORGANS EINER RAUPENKETTE AN EINEM RAUPENBAND DER RAUPENKETTE**
DEVICE TO FASTEN AN ENDLESS TRACK ORGAN TO THE ENDLESS TRACK BAND
DISPOSITIF DE FIXATION D'UN ORGANE DE CHENILLE SUR LA COURROIE DE CHENILLE.

(30) Priorität: 31.07.2018 DE 202018104420 U
(43) Veröffentlichungstag der Anmeldung: 09.06.2021
(73) Patentinhaber: Hans Hall GmbH, 88250 Weingarten (DE)
(72) Erfinder: HALL, Hans, 88250 Weingarten (DE)
(74) Vertreter: Otten, Roth, Dobler & Partner mbB Patentanwälte
(86) Internationale Anmeldenummer: PCT/EP2019/054256
(87) Internationale Veröffentlichungsnummer: WO 2020/025173

(56) Entgegenhaltungen:
- WO-A1-01/08963
- US-A- 3 838 894
- US-A- 4 938 546
- US-A- 5 033 801

## Beschreibung

Die Erfindung betrifft eine Vorrichtung zum Befestigen eines Raupenkettenorgans einer Raupenkette an einem Raupenband der Raupenkette nach den Merkmalen des Anspruchs 1, sowie ein Raupenband und/oder eine Raupenkette mit einer derartigen Vorrichtung.

### Stand der Technik

Vorrichtungen zum Befestigen eines Raupenkettenorgans, wie z.B. eines Raupenstegs, einer Raupenkette an einem Raupenband der Raupenkette sind beispielsweise aus der US 5 033 801 A oder der WO 01/08963 A1 bekannt.

Bekannte Vorrichtungen bestehen aus einer Strebe und Schrauben, wobei das Raupenband zwischen der Strebe und dem Raupensteg angeordnet ist und im Raupenband mehrere Öffnungen vorhanden sind, durch welche die Schrauben durchgreifen, sodass die Schrauben die Strebe mit dem Raupensteg verbinden und das Raupenband hierdurch zwischen Strebe und Raupensteg geklemmt vorhanden ist. Die Strebe und der Raupensteg erstrecken sich dabei entlang ihren Längserstreckungen parallel zueinander. Weitere bekannte Vorrichtungen sehen z.B. zusätzlich eine Distanzbüchse in den Öffnungen vor.

Nachteilig bei diesen Vorrichtungen ist, dass durch die Bewegung des Raupenbands im Fahrbetrieb, die Öffnungen sich zu Langlöcher verformen, wodurch insbesondere bei einem Einsatz der Raupenkette an einem Pistenfahrzeug Wasser bzw. Schnee in die Öffnungen des Raupenbands und zwischen Schichten des Raupenbands eindringt und dort Eisblasen bildet, wodurch das Raupenband zerstört wird, indem sich Lagen des Raupenbands lösen.

### Aufgabe und Vorteile der Erfindung

Aufgabe der Erfindung ist es, eine alternative Vorrichtung zum Befestigen eines Raupenkettenorgans einer Raupenkette an einem Raupenband der Raupenkette bereitzustellen, insbesondere die Vorrichtung derart zu verbessern, dass eine vergleichsweise längere Laufleistung bzw. Einsatzzeit eines Raupenbands realisiert ist.

Diese Aufgabe wird durch die Merkmale des Anspruchs 1 gelöst.

In den abhängigen Ansprüchen werden vorteilhafte und zweckmäßige Ausführungsformen der Erfindung angegeben.

Die Erfindung geht von einer Vorrichtung zum Befestigen eines Raupenkettenorgans einer Raupenkette an einem Raupenband der Raupenkette mit einem Einpresselement und einem Verbindungselement aus, wobei das Einpresselement einen beispielsweise scheibenartigen Grundkörper mit einer durchgehenden Öffnung aufweist, wobei im angeordneten Zustand des Einpresselements am Raupenband das Verbindungselement zum Verbinden des Raupenkettenorgans mit dem Raupenband durch die durchgehende Öffnung durchgreift. Die durchgehende Öffnung ist beispielsweise zylinderförmig, z.B. zylindrisch ausgebildet. Beispielsweise ist die durchgehende Öffnung als eine Bohrung und/oder Lochung am Grundkörper ausgebildet. Vorteilhafterweise ist die durchgehende Öffnung auf das Verbindungselement der Vorrichtung, z.B. auf eine Außenabmessung, z.B. einen Außendurchmesser, abgestimmt. Die durchgehende Öffnung ist insbesondere vollständig vom verbleibenden Grundkörper umschlossen. Beispielsweise ist die durchgehende Öffnung in Form einer Bohrung, insbesondere einer Durchgangsbohrung am Grundkörper vorhanden.

Der Grundkörper des Einpresselements ist beispielsweise ringscheibenartig vorhanden. Der Grundkörper besitzt z.B. eine Dicke zwischen 1mm und 10mm, z.B. zwischen 2mm und 5mm, insbesondere zwischen 3mm und 5mm. Die Dicke des Grundkörpers ist z.B. 1mm, 1,5mm, 2mm, 2,5mm, 3mm, 3,2mm, 3,3mm, 3,4mm, 3,5mm, 4mm, 4,5mm oder 5mm, insbesondere 3,1mm. Ein Außendurchmesser des Grundkörpers ist beispielsweise zwischen 40mm und 100mm, zwischen 40mm und 80mm oder zwischen 40mm und 60mm groß. Der Außendurchmesser ist z.B. 40mm, 45mm, 55mm oder 60mm, insbesondere 50mm. Ein Durchmesser der Öffnung des Grundkörpers ist beispielsweise größer als 8mm, z.B. größer als 10mm, insbesondere größer als 12mm, z.B. 13mm.

Vorteilhafterweise ist die Vorrichtung dazu ausgebildet Raupenbandenden eines Raupenbands zu verbinden. Das Raupenkettenorgan der Raupenkette ist beispielsweise als ein Raupensteg der Raupenkette vorhanden.

Das Raupenband ist beispielsweise aus einem elastischen, insbesondere elastomeren Grundmaterial, z.B. Gummi, hergestellt. Für eine Übertragung von Beschleunigungs- und Bremskräften eines Antriebsrads auf das Fahrwerk, insbesondere die Raupenkette ist in das Raupenband z.B. in das elastomere Material der Grundkette ein entlang einer Längserstreckung des Raupenbands insbesondere durchgehend ausgebildetes Zugmittel eingebettet. Das Zugmittel ist zum Beispiel als ein Gewebeband, z.B. aus Kunststofffasern und/oder Metallfasern, z.B. Stahlfasern, ausgebildet.

Vorteilhafterweise umfasst das Raupenband mehrere Gewebebandlagen. Die Gewebebandlagen sind vorteilhafterweise mittels des elastomeren Materials voneinander beabstandet vorhanden. Beispielsweise sind die Gewebebandlagen in das elastomere Material eingebettet vorhanden. Das Raupenband kann zwei oder mehr verschiedene elastomere Materialien aufweisen. Beispielsweise bildet ein erstes elastomeres Material eine Hülle des Raupenbands, in welchem die Gewebebandlagen und ein weiteres elastomeres Material vorhanden ist, in welches die Gewebebandlagen beispielsweise eingebettet vorhanden sind. Gewebestrukturen verschiedener Gewebebandlagen sind vorteilhafterweise versetzt verlaufend, z.B. quer zueinander, am Raupenband vorhanden.

Die Raupenkette ist beispielsweise ein Raupenband mit Eingriffen für ein Antriebsrad und mit Spurführungselementen, die zur Führung eines Fahrwerks des Kettenfahrzeugs in einer Laufrichtung des Raupenbands verlaufenden Spur an einer Innenseite des Raupenbands vorgesehen sind. Am Raupenband sind vorteilhafterweise einer Vielzahl von Vorrichtungen, z.B. Anbringeinrichtungen, ausgebildet, von denen jede zur Anbringung eines Raupenstegs an einer Außenseite des Raupenbands und quer zur Laufrichtung des Raupenbands vorgesehen sind. Eine Anbringeinrichtung des Raupenbands ist beispielsweise in Form einer Öffnung, z.B. einer Durchgangsöffnung, z.B. einer Durchgangsbohrung vorhanden. Denkbar ist auch, dass die Raupenkette zur Verwendung mit einer parallel mitlaufenden Seitenkette vorgesehen ist.

Der Kern der Erfindung ist darin zu sehen, dass das Einpresselement mehrere vom Grundkörper abstehende Halteelemente aufweist, wobei die Halteelemente derart ausgebildet sind, dass sie im angeordneten Zustand am Raupenband mehrere Materiallagen des Raupenbands durchdringen, indem die Halteelemente Material der Materiallagen insbesondere quer zur Eindringrichtung verdrängen, wobei die Halteelemente im angeordneten Zustand am Raupenband das Raupenband vollständig durchdringen, sodass das Einpresselement in direktem Kontakt mit dem Raupenkettenorgan ist. Hierdurch ist eine Kraftübertragung vom Raupenkettenorgan über die Vorrichtung auf das Raupenband oder umgekehrt verbessert, wodurch vergleichsweise geringere Kräfte, z.B. Scherkräfte zwischen Verbindungselement und Anbringeinrichtung, z.B. Öffnung, des Raupenbands wirken, womit eine Streckung, z.B. Langlochbildung der Öffnung zumindest verzögert ist. Die Kraft wirkt dabei beispielsweise von außen, z.B. von einem Untergrund, über welchen die Raupenkette des Raupenbands bewegt wird oder z.B. durch das Raupenband auf das Raupenkettenorgan, z.B. auf den Raupensteg ein.

Vorteilhafterweise durchstechen die Halteelemente im angeordneten Zustand am Raupenband mehrere Materiallagen des Raupenbands. Insbesondere sind die Halteelemente im angeordneten Zustand am Raupenband durch mehrere Materiallagen des Raupenbands durchgesteckt.

Beispielsweise ist eine Materiallage als ein Gewebe, z.B. als ein Gewebeband, insbesondere als ein Metallgewebe ausgebildet. Beispielsweise durchtrennen die Halteelemente im angeordneten Zustand am Raupenband bestimmte Materiallagen nicht, insbesondere durchtrennen die Halteelemente die Gewebelagen nicht. Vorteilhafterweise durchtrennen oder durchschneiden die Halteelemente im angeordneten Zustand am Raupenband eine, insbesondere alle Gewebelagen nicht. Vorteilhafterweise sind die Halteelemente derart ausgebildet, dass die Halteelemente im angeordneten Zustand am Raupenband zwischen freie Bereiche des Gewebes einer Gewebelage, z.B. in eine Gewebestruktur der Gewebelage, eindringen und das Gewebe insbesondere quer zur Eindringrichtung verdrängen, verschieben und/oder verdichten, das Gewebe jedoch vorteilhafterweise nicht zertrennen oder zerschneiden. Hierdurch ist das Einpresselement mit dem Raupenband, insbesondere mit den Gewebelagen des Raupenbands, ineinandergreifend verbunden, z.B. eingehakt und/oder eingehängt. Bevorzugterweise sind die Halteelemente derart ausgebildet, dass die Halteelemente in elastisches Material des Raupenbands im angeordneten Zustand eindringen und das elastische Material ggf. auch durchtrennen.

Der Grundkörper des Einpresselements ist z.B. als eine Ringscheibe, z.B. als eine Distanzscheibe und/oder eine Unterlegscheibe ausgebildet. Beispielsweise besitzt der Grundkörper einen runden, elliptischen oder ovalen Umriss. Denkbar ist auch, dass der Grundkörper leistenartig oder strebenartig ausgebildet ist. Beispielsweise umfasst der Grundkörper einen eckigen, z.B. rechteckigen, insbesondere quadratischen Umriss. Vorteilhafterweise umfasst der Grundkörper eine einzige durchgehende Öffnung. Vorstellbar ist aber auch, dass der Grundkörper zwei, drei, vier oder mehr durchgehende Öffnungen aufweist. Umfasst der Grundkörper mehrere durchgehende Öffnungen, so sind diese vorteilhafterweise zueinander beabstandet am Grundkörper ausgebildet. Beispielsweise ist die durchgehende Öffnung am Grundkörper zentrisch vorhanden.

Beispielsweise umfasst der Grundkörper eine erste und eine zweite Hauptseite, wobei die Hauptseiten sich gegenüberliegend und voneinander beabstandet sind. Vorteilhafterweise erstreckt sich die durchgehende Öffnung von der ersten Hauptseite bis zur zweiten Hauptseite. Zum Beispiel die durchgehende Öffnung an jeder Hauptseite eine Öffnung und/oder Aussparung der entsprechenden Hauptseite.

Bevorzugterweise ist das Einpresselement im angeordneten Zustand am Raupenband zwischen dem Raupenband und dem Raupenkettenorgan ausgebildet. Denkbar ist aber auch, dass das Einpresselement und das Raupenkettenorgan beabstandet zueinander ausgebildet sind und z.B. das Raupenband zwischen sich einschließen.

Vorteilhafterweise sind am Grundkörper des Einpresselements 2, 3, 4, 5, 6, 7, 9, 10 oder mehr Halteelemente, insbesondere 8 Halteelemente ausgebildet. Bevorzugterweise sind am Grundkörper mehr als zwei, mehr als drei, mehr als vier, mehr als acht oder mehr als zehn, insbesondere mehr als fünf Halteelemente vorhanden.

Auch ist es vorteilhaft, dass die Halteelemente voneinander beabstandet am Grundkörper angeordnet sind. Vorteilhafterweise sind alle Haltelemente an der ersten Hauptseite des Grundkörpers von dieser ersten Hauptseite abstehend vorhanden. Bevorzugterweise sind alle Halteelemente in eine gleiche Richtung abstehend vorhanden. Beispielsweise stehen die Halteelemente senkrecht zu einer Erstreckungsebene der ersten Hauptseite von der ersten Hauptseite ab. Vorstellbar ist auch, dass die Halteelemente, insbesondere alle Halteelemente in zueinander verschiedenen Richtungen abstehend am Grundkörper, beispielsweise abstehend von der ersten Hauptseite des Grundkörpers, angeordnet sind. Denkbar ist auch, dass die Halteelemente, insbesondere alle Halteelemente, sphärisch oder zylindrisch abstehend am Grundkörper vorhanden sind.

Von Vorteil erweist sich auch, dass die Halteelemente ausgehend vom Grundkörper zulaufend und/oder sich verjüngend ausgebildet sind. Hierdurch ist ein Anbringen, z.B. ein Einpressen des Einpresselements am Raupenband vergleichsweise erleichtert.

In einer vorteilhaften Ausbildung des Einpresselements der Vorrichtung ist ein Halteelement zapfenartig, nadelförmig, pyramidenförmig und/oder kegelförmig ausgebildet. Vorteilhafterweise sind alle Halteelemente ähnlich, insbesondere gleich oder identisch ausgebildet. Denkbar ist aber auch, dass die Halteelemente, insbesondere alle Halteelemente zueinander verschieden ausgebildet sind. Beispielsweise sind insbesondere genau zwei oder genau drei verschiedene Ausbildungsformen von Halteelementen am Grundkörper ausgebildet. Denkbar ist, dass zwei oder mehr Halteelemente unterschiedlich lang ausgebildet sind.

Weiter wird vorgeschlagen, dass ein Ende eines Halteelements sich verjüngend, abgerundet und/oder spitz zulaufend vorhanden ist. Das sich verjüngende Ende des Halteelements ist vorteilhafterweise vom Grundkörper, insbesondere von den Hauptseiten des Grundkörpers beabstandet vorhanden.

Die Halteelemente stehen von der ersten Hauptseite beispielsweise zwischen 8mm und 14mm ab, z.B. zwischen 8mm und 12mm. Eine Gesamthöhe des Einpresselements bestehend aus Grundkörper und Halteelement ausgehend von der zweiten Hauptseite des Grundkörpers bis zum verjüngenden Ende des Halteelements ist beispielsweise in einem Bereich zwischen 10mm und 100mm, z.B. zwischen 10mm und 40mm, z.B. zwischen 10mm und 30mm, z.B. zwischen 10mm und 20mm, z.B. zwischen 12mm und 16mm. Die Gesamthöhe des Einpresselements ist beispielsweise 12mm, 12,5mm, 13mm, 14,5mm oder 15mm, insbesondere 14mm.

Ein Durchmesser eines kegelstumpfartigen Halteelements im Anbindungsbereich am Grundkörper des Einpresselements ist beispielsweise zwischen 4mm und 8mm groß, insbesondere in einem Bereich von etwa 6mm.

Vorstellbar ist weiterhin, dass der Grundkörper und die Halteelemente des Einpresselements einstückig ausgebildet sind. Beispielsweise ist das Einpresselement, insbesondere sind der Grundkörper und die Halteelemente, aus Metall, z.B. aus Druckguss und/oder Kunststoff ausgebildet. Denkbar ist, dass das Einpresselement als ein Spritzguß- und/oder Druckgußbauteil vorhanden ist. Auch ist es vorstellbar, dass das Einpresselement geschmiedet ist.

Auch ist es von Vorteil, dass das Verbindungselement zum Verbinden des Einpresselements mit dem Raupenband und dem Raupenkettenorgan ausgebildet ist. Das Verbindungselement ist beispielsweise als ein Stift, ein Bolzen, eine Niet oder eine Schraube ausgebildet. Denkbar ist, dass das Verbindungselement als ein Gewindestift vorhanden ist. Vorstellbar ist auch, dass das Verbindungselement klammerartig ausgebildet ist, z.B. in Form einer Klammer. Vorteilhafterweise ist das Verbindungselement zum Verbinden der Raupenbandenden mit dem Einpresselement und/oder zum Verbinden des Einpresselements mit dem Raupenband und dem Raupenkettenorgan der Raupenkette ausgebildet.

In einer vorteilhaften Modifikation der Erfindung weist die Vorrichtung ein Gegenelement auf, wobei im angeordneten Zustand der Vorrichtung das Gegenelement und der Grundkörper des Einpresselements durch das Raupenband beabstandet vorhanden sind. Bevorzugterweise weist das Gegenelement eine durchgehende Öffnung auf, z.B. ein Loch, wobei im angeordneten Zustand am Raupenband das Verbindungselement durch die durchgehende Öffnung hindurchgreift. Denkbar ist auch, dass das Verbindungselement und das Gegenelement miteinander verbunden sind, z.B. einstückig ausgebildet sind. Das Gegenelement ist beispielsweise als eine Ringscheibe, z.B. als eine Distanzscheibe und/oder eine Unterlegscheibe ausgebildet. Beispielsweise sind das Gegenelement und der Grundkörper des Einpresselements identisch ausgebildet.

Beispielsweise besitzt das Gegenelement einen runden, elliptischen oder ovalen Umriss. Denkbar ist auch, dass das Gegenelement leistenartig oder strebenartig ausgebildet ist. Beispielsweise umfasst das Gegenelement einen eckigen, z.B. rechteckigen, insbesondere quadratischen Umriss. Vorteilhafterweise umfasst das Gegenelement eine einzige z.B. durchgehende Öffnung. Vorstellbar ist aber auch, dass das Gegenelement zwei, drei, vier oder mehr Öffnungen aufweist. Umfasst das Gegenelement mehrere Öffnungen, so sind diese vorteilhafterweise zueinander beabstandet am Gegenelement ausgebildet. Beispielsweise ist eine, insbesondere die Öffnung am Gegenelement zentriert vorhanden. Bevorzugterweise sind das Gegenelement und das Einpresselement aufeinander abgestimmt, insbesondere hinsichtlich der Anzahl der vorhandenen Öffnungen.

Vorteilhafterweise ist das Gegenelement in einer äußeren Erstreckung gesehen größer ausgebildet als eine Außendimension des Grundkörpers des Einpresselements, insbesondere in die gleiche Erstreckungsrichtung im angeordneten Zustand am Raupenband gesehen. Ein ringscheibenartiges Gegenelement besitzt vorteilhafterweise einen Außendurchmesser, welcher größer ist, als ein Außendurchmesser des Grundkörpers des Einpresselements. Ein ringscheibenartiges Gegenelement besitzt beispielsweise einen Außendurchmesser zwischen 50mm und 80mm, z.B. etwa 57mm. Vorteilhafterweise ist eine Dicke des Gegenelements im Vergleich zu einer Dicke des Grundkörpers des Einpresselements gleich oder größer. Die Dicke des Gegenelements ist beispielsweise in einem Bereich zwischen 2mm und 10mm, z.B. zwischen 3mm und 8mm. Die Dicke des Gegenelements ist beispielsweise 2mm, 3mm, 4mm, 4,5mm, 5,5mm, 6mm, 6,5mm, 7mm, 8mm oder 10mm, insbesondere 5mm.

Von Vorteil ist auch, dass der Grundkörper ein Positionierorgan aufweist, mittels welchem der Grundkörper im angeordneten Zustand am Raupenband relativ zum Raupenkettenorgan positionierbar ist. Hierdurch ist eine Montage der Vorrichtung erleichtert.

Vorteilhafterweise koppelt der Grundkörper mittels des Positionierorgans, insbesondere direkt oder unmittelbar, mit dem Raupenkettenorgan der Raupenkette. Bevorzugterweise ist der Grundkörper im angeordneten Zustand am Raupenband insbesondere durch das Positionierorgan am Raupenkettenorgan oder umgekehrt positionierbar.

Das Positionierorgan ist beispielsweise in Form einer Aussparung, in Form einer Einkerbung, in Form einer Erhebung, in Form eines Stifts und/oder in Form eines Bolzens ausgebildet. Beispielsweise ist der Grundkörper mittels des Positionierorgans im angeordneten Zustand am Raupenband mit dem Raupenkettenorgan verrastbar ausgebildet. Das Positionierorgan ist beispielsweise als ein Bolzen, Stift und/oder als ein Sackloch ausgebildet. Vorteilhafterweise ist das Positionierorgan an der zweiten Hauptseite des Grundkörpers ausgebildet. Beispielsweise umfasst der Grundkörper eine Ausfräsung und/oder Aussparung, in welche das Positionierorgan einsetzbar, z.B. einsteckbar und/oder einpressbar ist. Hierdurch ist ein verbesserter Kraftschluss zwischen Positionierorgan und Grundkörper realisierbar. Denkbar ist weiter, dass das Einpresselement zwei, drei oder mehr Positionierorgane aufweist. Beispielsweise sind die Positionierorgane voneinander beabstandet vorhanden. Hierdurch ist ein Verdrehen des Einpresselements relativ zum Raupenkettenorgan im angeordneten Zustand vermieden.

Eine vorteilhafte Ausbildung der Erfindung ist ein Raupenband mit einer Vorrichtung nach einer der vorangegangen genannten Varianten.

Weiter erweist es sich als vorteilhaft, dass eine Länge der Halteelemente des Einpresselements derart auf eine Dicke des Raupenbands abgestimmt vorhanden ist, dass die Halteelemente das Raupenband im angeordneten Zustand in Dickenrichtung des Raupenbands gesehen nicht durchdringen. Denkbar ist aber auch, dass die Halteelemente in einer Weise vorhanden sind, dass sie im angeordneten Zustand das Raupenband in Richtung einer Dicke des Raupenbands gesehen das Raupenband vollständig durchdringen. Eine Länge der Halteelemente entspricht beispielsweise der Dicke des Raupenbands. Denkbar ist auch, dass die Länge eines Halteelements größer ist, als eine Dicke des Raupenbands, sodass das verjüngende Ende des Halteelements im angeordneten Zustand des Einpresselements am Raupenband von einer Außenseite der Hülle des Raupenbands vorsteht.

Beispielsweise ist eine Länge der Halteelemente derart ausgebildet, dass eine Erstreckung der Halteelemente in einer Richtung senkrecht zur Erstreckungsebene der ersten Hauptseite von der ersten Hauptseite bis zum von der ersten Hauptseite beabstandeten Ende des Halteelements kleiner oder gleich ist, als die Dicke des Raupenbands. Das Raupenband erstreckt sich vorteilhafterweise entlang einer Länge, einer Breite und einer Dicke. Die Länge des Raupenbands ist in eine Längserstreckung und/oder in Laufrichtung des Raupenbands gesehen. Die Breite des Raupenbands ist quer zur Laufrichtung des Raupenbands und in Richtung einer Längserstreckung eines an das Raupenband angeordneten Raupenkettenorgans, z.B. eines Raupenstegs zu sehen.

In einer vorteilhaften Ausführung ist der Grundkörper an der ersten Hauptseite in einem Bereich um die durchgehende Öffnung erhaben ausgebildet. Beispielsweise umfasst der Grundkörper ein Abdichtorgan, z.B. in Form eines Wulsts, um insbesondere im angeordneten Zustand am Raupenband die Öffnung des Raupenbands abzudichten. Beispielsweise ist ein Öffnungsbereich der durchgehenden Öffnung an der ersten Hauptseite mittels eines Abdichtorgans, z.B. wulstartig, umlaufend umschlossen. Das Abdichtorgan, z.B. der Wulst, greift im angeordneten Zustand beispielsweise in die Öffnung des Raupenbands, insbesondere in das Raupenband, z.B. in das elastische Material des Raupenbands ein. Hierdurch ist das Einpresselement am Raupenband justierbar. Vorteilhafterweise schließt das Abdichtorgan, z.B. der Wulst, im angeordneten Zustand am Raupenband die Öffnung des Raupenbands ab, sodass von Außen vergleichsweise wenig Wasser oder Feuchtigkeit in die Öffnung des Raupenbands eindringen kann. Denkbar ist weiterhin, dass um die Öffnung des Gegenelements ein vergleichbares Abdichtorgan ausgebildet ist, sodass die Öffnung des Raupenbands von beiden Seiten im angeordneten Zustand der Vorrichtung abgedichtet vorhanden ist.

Eine weitere alternative Modifikation der Erfindung ist eine Raupenkette mit einem Raupenband und/oder mit einer Vorrichtung nach einer der vorangegangen genannten Varianten.

Eine alternative Ausführungsform der Erfindung ist ein Raupenfahrzeug, insbesondere Kettenfahrzeug mit einer Raupenkette, mit einem Raupenband und/oder mit einer Vorrichtung nach einer der vorangegangen aufgeführten Varianten.

Zur Kategorie der Raupen- oder Kettenfahrzeuge gehören insbesondere Schneefahrzeuge wie z.B. Pistenfahrzeuge, Loipenpräparationsfahrzeuge und/oder Pistenraupen.

### Beschreibung eines Ausführungsbeispiels

Mehrere Ausführungsbeispiele werden anhand der nachstehenden schematischen Zeichnungen unter Angabe weiterer Einzelheiten und Vorteile näher erläutert.

Es zeigen:
- Figur 1: eine Seitenansicht auf eine erfindungsgemäße Vorrichtung,
- Figur 2: eine perspektivische Ansicht von schräg seitlich oben auf eine weitere Variante der Vorrichtung,
- Figur 3: eine perspektivische Ansicht von schräg seitlich unten auf das Einpresselement der Vorrichtung nach Figur 2,
- Figur 4: eine Schnittansicht durch das Raupenband auf eine am Raupenband angeordnete Vorrichtung gemäß Figur 2 und
- Figur 5: eine perspektivische Ansicht auf am Raupenband angeordnete Vorrichtungen nach Figur 2.

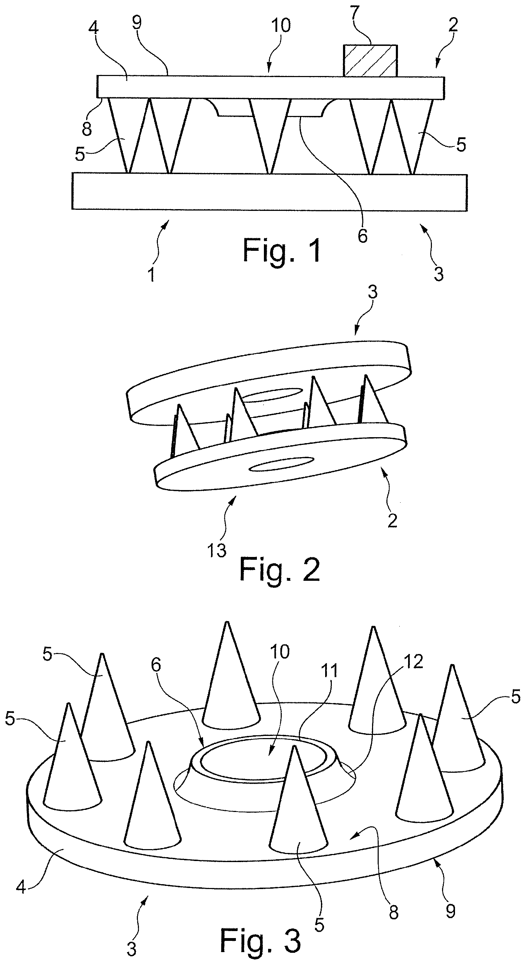

Figur 1 zeigt eine erste Variante einer erfindungsgemäßen Vorrichtung 1 bestehend aus einem Einpresselement 2 und einem Gegenelement 3.

Der Übersichtlichkeit halber werden im Folgenden für verschiedene Ausführungsformen einer Vorrichtung und insbesondere eines Einpresselements gleiche Bezugszeichen verwendet. Vorteilhafterweise sind die im Folgenden beschriebenen einzelnen Ausführungsvarianten mit einer weiteren dazu verschiedenen Ausführungsvariante flexibel kombinierbar.

Das Gegenelement 3 ist beispielsweise als eine Unterlegscheibe mit einem z.B. zentrisch vorhandenen Durchgangsloch ausgebildet. Das Einpresselement 2 umfasst einen Grundkörper 4, Halteelemente 5, ein Abdichtorgan 6, sowie ein Positionierorgan 7.

Der Grundkörper 4 ist vorteilhafterweise scheibenartig oder plattenartig ausgebildet und besitzt eine erste Hauptseite 8 und eine zweite Hauptseite 9, welche sich gegenüberliegend und beabstandet zueinander vorhanden sind. Die erste und die zweite Hauptseite 8, 9 bilden vorteilhafterweise Haupterstreckungsebenen des Grundkörpers 4. Der Grundkörper 4 umfasst außerdem eine durchgehende Öffnung 10. An der zweiten Hauptseite 9 ist beispielsweise das Positionierorgan 7 von der zweiten Hauptseite 9 abstehend vorhanden.

Von der ersten Hauptseite 8 des Grundkörpers 4 sind die Halteelemente 5 abstehend vorhanden. Die Halteelemente 5 sind beispielsweise kegelförmig oder kegelstumpfartig ausgebildet. Die Halteelemente 5 sind beispielsweise entlang eines Kreisbogens voneinander beabstandet an der ersten Hauptseite 8 des Grundkörpers 4 angeordnet. Der Kreisbogen besitzt einen Kreismittelpunkt, welcher z.B. mit einer Symmetrieachse, z.B. einer Rotationsachse des Grundkörpers 4 zusammenfällt.

Das Abdichtorgan 6 ist vorteilhafterweise wulstartig ausgebildet. Das Abdichtorgan 6 umschließt einen Rand der Öffnung 10 des Grundkörpers auf der ersten Hauptseite 8 beispielsweise vollständig umlaufend. Das Abdichtorgan 6 ist von einer Haupterstreckungsebene der ersten Hauptfläche 8 erhaben vorhanden. Ein innerer Bereich 11 des Abdichtorgans 6 ist beispielsweise hülsenartig ausgebildet, z.B. hohlzylinderförmig. Eine Wandstärke eines hohlzylinderförmig ausgebildeten Abdichtorgans 6 ist beispielsweise zwischen 1mm und 5mm groß, z.B. 2mm. Ein Übergang 12 des inneren Bereichs 11 des Abdichtorgans 6 hin zur Haupterstreckungsebene der ersten Hauptfläche 8 ist beispielsweise abgerundet vorhanden.

In den Figuren 2, 3 ist eine weitere Vorrichtung 13 mit einer weiteren Variante eine Einpresselements 2 dargestellt.

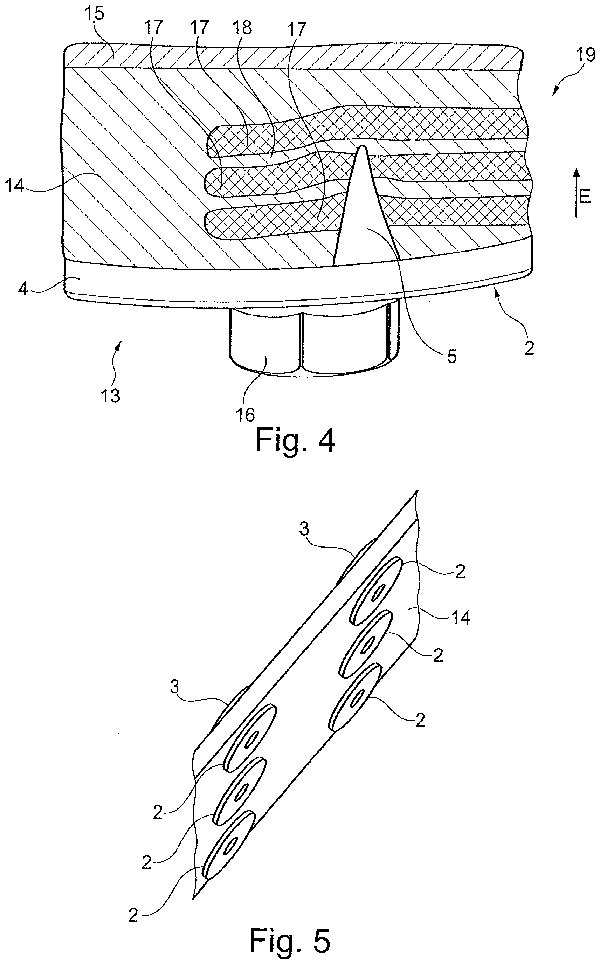

Figur 4 zeigt eine Raupenkette 19. An der Raupenkette 19 ist die Vorrichtung 13 in einem angeordneten Zustand an einem Raupenband 14 vorhanden, wobei mittels der Vorrichtung ein Raupenkettenorgan in Form eines Raupenstegs 15 am Raupenband 14 befestigt ist. Das Einpresselement 2 ist hierbei mittels eines Verbindungselements in Form einer Schraube 16 mit dem Raupensteg 15 verbunden. In der Schnittansicht des Raupenstegs 15 in Figur 4 gezeigt sind mehrere Gewebelagen 17 des Raupenbands 14, welche in einem elastischen Material 18 des Raupenbands 14 eingebettete vorhanden sind.

Die Halteelemente 5 sind vorteilhafterweise derart ausgebildet, dass im angeordneten Zustand des Einpresselements 2 am Raupenband 14 die Halteelemente 5 eine Gewebestruktur der Gewebelagen 17 durchdringen, sodass die Halteelemente 5 die Gewebestruktur durchgreifen und die Gewebestruktur der Gewebelagen hierbei vorteilhafterweise quer zur Eindringrichtung E verdichten bzw. verdrängen. Dadurch wird ein Durchtrennen der Gewebelagen bevorzugterweise vermieden, wodurch eine Schwächung des Raupenbands 14 vorteilhafterweise vermindert ist. Auch ist hierdurch eine vergleichsweise starke Verankerung des Einpresselements 2 mit dem Raupenband 14 bewirkt.

Wie in Figur 5 dargestellt werden vorteilhafterweise mehrere, insbesondere drei Vorrichtungen 13 an das Raupenband 14 angeordnet, um ein Raupenkettenorgan (in Figur 5 nicht dargestellt) am Raupenband 14 zu befestigen.

### Bezugszeichenliste

- 1: Vorrichtung
- 2: Einpresselement
- 3: Gegenelement
- 4: Grundkörper
- 5: Halteelement
- 6: Abdichtorgan
- 7: Positionierorgan
- 8: Hauptseite
- 9: Hauptseite
- 10: Öffnung
- 11: Bereich
- 12: Übergang
- 13: Vorrichtung
- 14: Raupenband
- 15: Raupensteg
- 16: Schraube
- 17: Gewebelage
- 18: Material
- 19: Raupenkette

## Patentansprüche

1. Vorrichtung (1, 13) zum Befestigen eines Raupenkettenorgans (15) einer Raupenkette (19) an einem Raupenband (14) der Raupenkette (19) mit einem Einpresselement (2) und einem Verbindungselement (16), wobei das Einpresselement (2) einen Grundkörper (4) mit einer durchgehenden Öffnung (10) aufweist, wobei im angeordneten Zustand des Einpresselements (2) am Raupenband (14) das Verbindungselement (16) zum Verbinden des Raupenkettenorgans (15) mit dem Raupenband (14) durch die durchgehende Öffnung (10) durchgreift,
wobei
das Einpresselement (2) mehrere vom Grundkörper (4) abstehende Halteelemente (5) aufweist, wobei die Halteelemente (5) derart ausgebildet sind, dass sie im angeordneten Zustand am Raupenband (14) mehrere Materiallagen (17, 18) des Raupenbands (14) durchdringen, indem die Halteelemente (5) Material der Materiallagen (17, 18) insbesondere quer zur Eindringrichtung verdrängen,
**dadurch gekennzeichnet, dass**
die Halteelemente (5) im angeordneten Zustand am Raupenband (14) das Raupenband (14) vollständig durchdringen, sodass das Einpresselement (2) in direktem Kontakt mit dem Raupenkettenorgan (15) ist.

2. Vorrichtung (1, 13) zum Befestigen eines Raupenkettenorgans (15) einer Raupenkette (19) an einem Raupenband (14) der Raupenkette (19) nach einem der vorangegangenen Ansprüche, **dadurch gekennzeichnet, dass** die Halteelemente (5) um die Öffnung (10) herum kreisförmig angeordnet und voneinander beabstandet vorhanden sind.

3. Vorrichtung (1, 13) zum Befestigen eines Raupenkettenorgans (15) einer Raupenkette (19) an einem Raupenband (14) der Raupenkette (19) nach einem der vorangegangenen Ansprüche, **dadurch gekennzeichnet, dass** die Halteelemente (5) ausgehend vom Grundkörper (4) zulaufend und/oder sich verjüngend ausgebildet sind.

4. Vorrichtung (1, 13) zum Befestigen eines Raupenkettenorgans (15) einer Raupenkette (19) an einem Raupenband (14) der Raupenkette (19) nach einem der vorangegangenen Ansprüche, **dadurch gekennzeichnet, dass** die Halteelemente (5) voneinander beabstandet am Grundkörper (4) angeordnet sind.

5. Vorrichtung (1, 13) zum Befestigen eines Raupenkettenorgans (15) einer Raupenkette (19) an einem Raupenband (14) der Raupenkette (19) nach einem der vorangegangenen Ansprüche, **dadurch gekennzeichnet, dass** ein Halteelement (5) zapfenartig, nadelförmig und/oder kegelförmig ausgebildet ist.

6. Vorrichtung (1, 13) zum Befestigen eines Raupenkettenorgans (15) einer Raupenkette (19) an einem Raupenband (14) der Raupenkette (19) nach einem der vorangegangenen Ansprüche, **dadurch gekennzeichnet, dass** ein Ende eines Halteelements (5) sich verjüngend, abgerundet und/oder spitz zulaufend vorhanden ist.

7. Vorrichtung (1, 13) zum Befestigen eines Raupenkettenorgans (15) einer Raupenkette (19) an einem Raupenband (14) der Raupenkette (19) nach einem der vorangegangenen Ansprüche, **dadurch gekennzeichnet, dass** das Verbindungselement (16) zum Verbinden des Einpresselements (2) mit dem Raupenband (14) und dem Raupenkettenorgan (15) der Raupenkette (19) ausgebildet ist.

8. Vorrichtung (1, 13) zum Befestigen eines Raupenkettenorgans (15) einer Raupenkette (19) an einem Raupenband (14) der Raupenkette (19) nach einem der vorangegangenen Ansprüche, **dadurch gekennzeichnet, dass** die Vorrichtung (1, 13) ein Gegenelement (3) aufweist, wobei im angeordneten Zustand der Vorrichtung (1, 13) das Gegenelement (3) und der Grundkörper (4) des Einpresselements (2) durch das Raupenband (14) beabstandet vorhanden sind.

9. Vorrichtung (1, 13) zum Befestigen eines Raupenkettenorgans (15) einer Raupenkette (19) an einem Raupenband (14) der Raupenkette (19) nach einem der vorangegangenen Ansprüche, **dadurch gekennzeichnet, dass** der Grundkörper (4) ein Positionierorgan (7) aufweist, mittels welchem der Grundkörper (4) im angeordneten Zustand am Raupenband (14) relativ zum Raupenkettenorgan (15) positionierbar ist.

10. Raupenband (14) mit einer Vorrichtung (1, 13) nach einem der vorangegangenen Ansprüche.

11. Raupenkette (19) mit einem Raupenband (14) nach dem Anspruch 10 und/oder einer Vorrichtung (1, 13) nach einem der vorangegangenen Ansprüche 1 bis 9.

12. Raupenfahrzeug, insbesondere Kettenfahrzeug, mit einer Raupenkette (19) nach Anspruch 11, einem Raupenband (14) nach Anspruch 10 und/oder einer Vorrichtung (1, 13) nach einem der Ansprüche 1 bis 9.

## Claims

1. Apparatus (1, 13) for fastening a crawler track member (15) of a crawler track (19) to a crawler belt (14) of the crawler track (19) with a press-in element (2) and a connecting element (16), the press-in element (2) having a main body (4) with a through opening (10), the connecting element (16) engaging through the through opening (10) in that state of the press-in element (2), in which it is arranged on the crawler belt (14), in order to connect the crawler track member (15) to the crawler belt (14), the press-in element (2) having a plurality of holding elements (5) which project from the main body (4), the holding elements (5) being configured in such a way that, in the state arranged on the crawler belt (14), they penetrate a plurality of material layers (17, 18) of the crawler belt (14), by the holding elements (5) displacing material of the material layers (17, 18), in particular transversely with respect to the penetration direction, **characterized in that**, in the state arranged on the crawler belt (14), the holding elements (5) completely penetrate the crawler belt (14), with the result that the press-in element (2) is in direct contact with the crawler track member (15).

2. Apparatus (1, 13) for fastening a crawler track member (15) of a crawler track (19) to a crawler belt (14) of the crawler track (19) according to one of the preceding claims, **characterized in that** the holding elements (5) are arranged in a circular manner around the opening (10) and are present in a manner which is spaced apart from one another.

3. Apparatus (1, 13) for fastening a crawler track member (15) of a crawler track (19) to a crawler belt (14) of the crawler track (19) according to one of the preceding claims, **characterized in that**, starting from the main body (4), the holding elements (5) are of pointed and/or tapering configuration.

4. Apparatus (1, 13) for fastening a crawler track member (15) of a crawler track (19) to a crawler belt (14) of the crawler track (19) according to one of the preceding claims, **characterized in that** the holding elements (5) are arranged spaced apart from one another on the main body (4).

5. Apparatus (1, 13) for fastening a crawler track member (15) of a crawler track (19) to a crawler belt (14) of the crawler track (19) according to one of the preceding claims, **characterized in that** a holding element (5) is of pin-like, needle-shaped and/or conical configuration.

6. Apparatus (1, 13) for fastening a crawler track member (15) of a crawler track (19) to a crawler belt (14) of the crawler track (19) according to one of the preceding claims, **characterized in that** one end of a holding element (5) is present in a tapering, rounded and/or sharply pointed manner.

7. Apparatus (1, 13) for fastening a crawler track member (15) of a crawler track (19) to a crawler belt (14) of the crawler track (19) according to one of the preceding claims, **characterized in that** the connecting element (16) is configured to connect the press-in element (2) to the crawler belt (14) and the crawler track member (15) of the crawler track (19).

8. Apparatus (1, 13) for fastening a crawler track member (15) of a crawler track (19) to a crawler belt (14) of the crawler track (19) according to one of the preceding claims, **characterized in that** the apparatus (1, 13) has a counter-element (3), the counter-element (3) and the main body (4) of the press-in element (2) being present spaced apart by way of the crawler belt (14) in the arranged state of the apparatus (1, 13).

9. Apparatus (1, 13) for fastening a crawler track member (15) of a crawler track (19) to a crawler belt (14) of the crawler track (19) according to one of the preceding claims, **characterized in that** the main body (4) has a positioning member (7), by means of which the main body (4) can be positioned relative to the crawler track member (15) in the state arranged on the crawler belt (14) .

10. Crawler belt (14) with an apparatus (1, 13) according to one of the preceding claims.

11. Crawler track (19) with a crawler belt (14) according to Claim 10 and/or an apparatus (1, 13) according to one of the preceding Claims 1 to 9.

12. Crawler vehicle, in particular track vehicle, with a crawler track (19) according to Claim 11, a crawler belt (14) according to Claim 10, and/or an apparatus (1, 13) according to one of Claims 1 to 9.

## Revendications

1. Dispositif (1, 13) pour la fixation d'un organe de chenille (15) d'une chenille (19) sur une courroie de chenille (14) de la chenille (19) avec un élément d'enfoncement (2) et un élément de liaison (16), l'élément d'enfoncement (2) comprenant un corps de base (4) muni d'une ouverture traversante (10) ; dans l'état agencé de l'élément d'enfoncement (2) sur la courroie de chenille (14), l'élément de liaison (16) passant à travers l'ouverture traversante (10) pour la liaison de l'organe de chenille (15) à la courroie de chenille (14), l'élément d'enfoncement (2) comprenant plusieurs éléments de retenue (5) faisant saillie à partir du corps de base (4), les éléments de retenue (5) étant configurés de telle sorte qu'à l'état agencé sur la courroie de chenille (14), ils transpercent plusieurs couches de matériau (17, 18) de la courroie de chenille (14), par le fait que les éléments de retenue (5) refoulent du matériau des couches de matériau (17, 18), notamment perpendiculairement à la direction de pénétration,
**caractérisé en ce que**
les éléments de retenue (5), à l'état agencé sur la courroie de chenille (14), transpercent complètement la courroie de chenille (14), de telle sorte que l'élément d'enfoncement (2) est en contact direct avec l'organe de chenille (15).

2. Dispositif (1, 13) pour la fixation d'un organe de chenille (15) d'une chenille (19) sur une courroie de chenille (14) de la chenille (19) selon l'une quelconque des revendications précédentes, **caractérisé en ce que** les éléments de retenue (5) sont agencés de manière circulaire autour de l'ouverture (10) et sont espacés les uns des autres.

3. Dispositif (1, 13) pour la fixation d'un organe de chenille (15) d'une chenille (19) sur une courroie de chenille (14) de la chenille (19) selon l'une quelconque des revendications précédentes, **caractérisé en ce que** les éléments de retenue (5) sont configurés sous forme convergente et/ou se rétrécissant en partant du corps de base (4).

4. Dispositif (1, 13) pour la fixation d'un organe de chenille (15) d'une chenille (19) sur une courroie de chenille (14) de la chenille (19) selon l'une quelconque des revendications précédentes, **caractérisé en ce que** les éléments de retenue (5) sont agencés espacés les uns des autres sur le corps de base (4).

5. Dispositif (1, 13) pour la fixation d'un organe de chenille (15) d'une chenille (19) sur une courroie de chenille (14) de la chenille (19) selon l'une quelconque des revendications précédentes, **caractérisé en ce qu'**un élément de retenue (5) est configuré à la façon d'un tenon, en forme d'aiguille et/ou en forme de cône.

6. Dispositif (1, 13) pour la fixation d'un organe de chenille (15) d'une chenille (19) sur une courroie de chenille (14) de la chenille (19) selon l'une quelconque des revendications précédentes, **caractérisé en ce qu'**une extrémité d'un élément de retenue (5) se présente sous forme se rétrécissant, arrondie et/ou effilée.

7. Dispositif (1, 13) pour la fixation d'un organe de chenille (15) d'une chenille (19) sur une courroie de chenille (14) de la chenille (19) selon l'une quelconque des revendications précédentes, **caractérisé en ce que** l'élément de liaison (16) est configuré pour la liaison de l'élément d'enfoncement (2) à la courroie de chenille (14) et à l'organe de chenille (15) de la chenille (19).

8. Dispositif (1, 13) pour la fixation d'un organe de chenille (15) d'une chenille (19) sur une courroie de chenille (14) de la chenille (19) selon l'une quelconque des revendications précédentes, **caractérisé en ce que** le dispositif (1, 13) comprend un comprend un contre-élément (3) ; dans l'état agencé du dispositif (1, 13), le contre-élément (3) et le corps de base (4) de l'élément d'enfoncement (2) étant espacés par la courroie de chenille (14).

9. Dispositif (1, 13) pour la fixation d'un organe de chenille (15) d'une chenille (19) sur une courroie de chenille (14) de la chenille (19) selon l'une quelconque des revendications précédentes, **caractérisé en ce que** le corps de base (4) comprend un organe de positionnement (7) au moyen duquel le corps de base (4) peut être positionné à l'état agencé sur la courroie de chenille (14) par rapport à l'organe de chenille (15).

10. Courroie de chenille (14) munie d'un dispositif (1, 13) selon l'une quelconque des revendications précédentes.

11. Chenille (19) munie d'une courroie de chenille (14) selon la revendication 10 et/ou d'un dispositif (1, 13) selon l'une quelconque des revendications 1 à 9 précédentes.

12. Véhicule à chenilles, notamment véhicule à chaînes, muni d'une chenille (19) selon la revendication 11, d'une courroie de chenille (14) selon la revendication 10 et/ou d'un dispositif (1, 13) selon l'une quelconque des revendications 1 à 9.
